# EUROPEAN PATENT APPLICATION

(11) **EP 3 978 764 A1**
(43) Date of publication of application: **06.04.2022**
(21) Application number: 20796024.6
(22) Date of filing: 16.04.2020
(51) Int. Cl.: F04D 29/44, B60H 1/00, F04D 25/16

(54) **CENTRIFUGAL BLOWER**

(30) Priority: 22.04.2019 JP 2019080610
(71) Applicant: Valeo Japan Co., Ltd., Kumagaya-Shi SAITAMA 360-0193 (JP)
(72) Inventor: SAKURAI, Yusaku, Kumagaya-shi Saitama 360-0193 (JP); SAHU, Ashish, Kumagaya-shi Saitama 360-0193 (JP); NAGANO, Hideki, Kumagaya-shi Saitama 360-0193 (JP); HAYASHI, Naoto, Kumagaya-shi Saitama 360-0193 (JP)
(74) Representative: Valeo Systèmes Thermiques
(86) International application number: PCT/JP2020/016689
(87) International publication number: WO 2020/218143

(57) **Abstract**

The invention provides a centrifugal blower with high air blowing efficiency. An internal space (A1, A2) of a scroll housing (40) is divided by a dividing wall portion (43b) into a one side space (A1) and an other side space (A2). A boundary between a peripheral face portion (43a) and the dividing wall portion (43b) is formed of a one side boundary portion (44) formed in such a way as to face the one side space and an other side boundary portion (45) formed in such a way as to face the other side space (A2). At least one of the one side boundary portion (44) or the other side boundary portion (45) is formed in a curved form in a circumferential direction of a rotary shaft (32a).

## Description

### Technical Field

The present invention relates to a centrifugal blower used in a vehicle-use air conditioning device or the like.

### Background Art

For example, a device in which a centrifugal blower is mounted is known as a vehicle-use air conditioning device. When a centrifugal blower operates, air outside a vehicle or air inside a vehicle cabin is sucked in, and blown toward a heat exchanger. Air that has been subjected to a heat exchange by passing through the heat exchanger is blown into the vehicle cabin. Because of this, a temperature inside the vehicle cabin can be regulated to a predetermined temperature. As existing technology relating to a centrifugal blower, there is technology disclosed in Patent Literature 1.

A centrifugal blower disclosed in Patent Literature 1 has a scroll housing whose sectional area increases in accordance with a winding angle, a motor supported by the scroll housing, and an impeller that discharges air suctioned in from an upper side of the motor toward a radial direction outer side.

The scroll housing has a peripheral face portion disposed opposing a blade cascade, and a dividing wall portion (a partitioning plate) that extends from the peripheral face portion toward the blade cascade.

An internal space of the scroll housing is divided into an upper space and a lower space by the dividing wall portion. Each of the spaces forms a flow path for blown air.

### Citation List

### Patent Literature

Patent Literature 1: JP-A-2004-132342

### Summary of Invention

### Technical Problem

Results of research by the inventors show that there is concern that a vortex flow will occur in a boundary portion between the peripheral face portion and the dividing wall portion in the internal space of the scroll housing in the centrifugal blower according to Patent Literature 1. When a vortex flow occurs, a smooth flow of air is inhibited, and air blowing efficiency decreases.

The invention has an object of providing a centrifugal blower that has high air blowing efficiency.

### Solution to Problem

In the following description, reference signs in the attached drawings are added in parentheses in order to facilitate understanding of the invention, but the invention is not limited thereby to aspects shown in the drawings.

The invention provides a vehicle-use single suction type centrifugal blower (30, 30A) characterized by including a motor (32) having a rotary shaft (32a), an impeller (33) that has a multiple of blades (33a) forming a blade cascade in a circumferential direction, is driven to rotate around an axis of rotation (CL) of the rotary shaft (32a) by the motor (32), and discharges air suctioned in from one axial direction side to an inner side of the blade cascade toward a radial direction outer side of the rotary shaft (32a), and a scroll housing (40) including an internal space (A1, A2) housing the impeller (33), a suction port (40a) opening on the one axial direction side, and a discharge port (40b) opening toward the radial direction outer side of the rotary shaft (32a), wherein a sectional area of the internal space (A1, A2) increases in accordance with a winding angle, wherein the scroll housing (40) has a one side case (41) that has the suction port (40a) and opposes at least one side of the blade cascade, an other side case (42) that opposes at least an other side of the blade cascade, and an intermediate case (43) that connects the one side case (41) and the other side case (42) and opposes a radial direction outer side of the blade cascade, the intermediate case (43) has a peripheral face portion (43a) disposed opposing the blade cascade and a dividing wall portion (43b) extending from the peripheral face portion (43a) toward the blade cascade, a region of the internal space (A1, A2) farther to a radial direction outer side than the impeller (33) is divided by the dividing wall portion (43b) into a one side space (A1), which is a space on the one side, and an other side space (A2), which is a space on the other side, a boundary between the peripheral face portion (43a) and the dividing wall portion (43b) is formed of a one side boundary portion (44) formed in such a way as to face the one side space (A1) and an other side boundary portion (45) formed in such a way as to face the other side space (A2), and at least one of the one side boundary portion (44) or the other side boundary portion (45) is formed in a curved form in a circumferential direction of the rotary shaft (32a).

Preferably, a radius of curvature of the one side boundary portion (44) formed in a curved form and/or a radius of curvature of the other side boundary portion (45) formed in a curved form increases in accordance with the winding angle.

Preferably, the one side case (41) has a one side reference face (41a), which opposes the blade cascade, and a one side bulging face (41b), which is farther to the radial direction outer side than the blade cascade and bulges farther to the axial direction one side than the one side reference face (41a), and a dimension (t1) of a bulging in the axial direction of the one side bulging face (41b) with respect to the one side reference face (41a) increases in accordance with the winding angle, and/or the other side case (42) has an other side reference face (42a), which opposes the blade cascade, and an other side bulging face (42b), which is farther to the radial direction outer side than the blade cascade and bulges farther to the axial direction other side than the other side reference face (42a), and a dimension (t2) of a bulging in the axial direction of the other side bulging face (42b) with respect to the other side reference face (42a) increases in accordance with the winding angle.

Preferably, the dividing wall portion (43b) has a collision restricting wall portion (46) that extends in the axial direction from a radial direction inner side leading end to the other side space (A2), and restricts a collision between a discharged air flow discharged to the radial direction outer side from the blade cascade and a returned air flow returned to the blade cascade after circulating around the other side space (A2), wherein the collision restricting wall portion (46) is formed in at least one portion of a region of the dividing wall portion (43b) whose winding angle is greater than 180 degrees.

### Advantageous Effects of Invention

The invention is such that a boundary between a peripheral face portion and a dividing wall portion is formed of a one side boundary portion, which is formed in such a way as to face a one side space, and an other side boundary portion, which is formed in such a way as to face an other side space. At least one of the one side boundary portion or the other side boundary portion is formed in a curved form in a circumferential direction of a rotary shaft. Owing to the one side boundary portion and/or the other side boundary portion being formed in a curved form, a vortex flow can be restricted from occurring in the one side boundary portion and/or the other side boundary portion. As a result, a centrifugal blower with high air blowing efficiency can be provided.

### Brief Description of Drawings

[Fig. 1] Fig. 1 is a schematic view of a vehicle-use air conditioning device in which a centrifugal blower according to a first working example is mounted.
[Fig. 2] Fig. 2A is a sectional view along a 2A-2A line of Fig. 1, Fig. 2B is a sectional view along a 2B-2B line of Fig. 2A, Fig. 2C is a sectional view along a 2C-2C line of Fig. 2A, Fig. 2D is a sectional view along a 2D-2D line of Fig. 2A, and Fig. 2E is a sectional view along a 2E-2E line of Fig. 2A.
[Fig. 3] Fig. 3 is a drawing wherein a main portion of the centrifugal blower shown in Fig. 2D is enlarged.
[Fig. 4] Fig. 4A is a drawing illustrating an action of a centrifugal blower according to a comparative example, and Fig. 4B is a drawing illustrating an action of a centrifugal blower according to a working example.
[Fig. 5] Fig. 5 is a sectional view of a state wherein a centrifugal blower according to a second working example is seen from above.
[Fig. 6] Fig. 6 is a sectional view along a 6-6 line of Fig. 5.

### Description of Embodiments

An embodiment of the invention will be described hereafter, based on the attached drawings. In the drawings, "Up" indicates "up" and "Dn" indicates "down".

### First Working Example

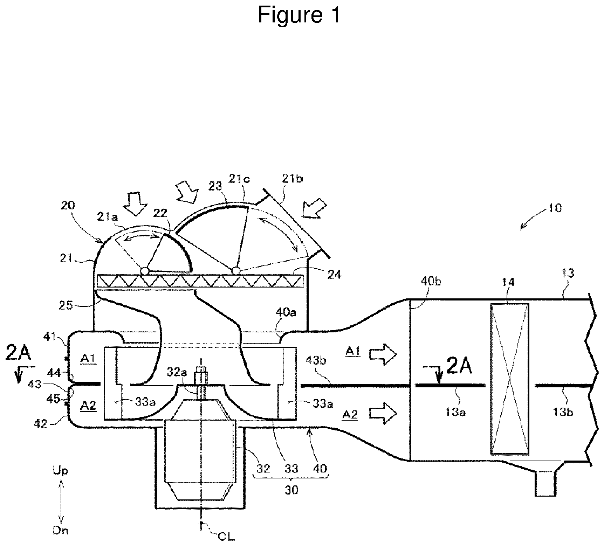

Reference will be made to Fig. 1. A vehicle-use air conditioning device 10 is shown in Fig. 1. The vehicle-use air conditioning device 10 has an air introduction unit 20 into which air is introduced, a centrifugal blower 30, which is connected to the air introduction unit 20 and draws in air from the air introduction unit 20, an HVAC case 13, which is connected to the centrifugal blower 30 and through which air sent from the centrifugal blower 30 passes, and a heat exchanger 14, which is provided in an interior of the HVAC case 13 and which carries out a heat exchange when air flowing inside the HVAC case 13 passes through.

The air introduction unit 20 has an air introduction housing 21 in which a first internal air inlet 21a and a second internal air inlet 21c for introducing air outside a vehicle cabin, and an external air inlet 21b for introducing air inside the vehicle cabin are formed, a first intake door 22 provided in such a way as to be able to open and close the first internal air inlet 21a, a second intake door 23 provided in such a way as to be able to switch between the second internal air inlet 21c and the external air inlet 21b, a filter 24 that restricts a passing through of a foreign body when air introduced from the first internal air inlet 21a and/or the external air inlet 21b passes through, and a cylindrical body 25, which extends from a downstream side of the filter 24 to an interior of the centrifugal blower 30, and can distribute air that has passed through the first internal air inlet 21a to a space on an inner side.

The first intake door 22 is provided in such a way as to be able to rotate, and is caused to rotate by, for example, an unshown actuator. The first intake door 22 is adjusted to an arbitrary position between an internal air position (a position shown in Fig. 1), wherein the first intake door 22 prohibits air introduced from the external air inlet 21b or the second internal air inlet 21c from flowing into the cylindrical body 25 while fully opening the first internal air inlet 21a, and an external air position (not shown), wherein the first intake door 22 allows air introduced from the external air inlet 21b to flow into the cylindrical body 25 while closing the first internal air inlet 21a.

The second intake door 23 is provided in such a way as to be able to rotate, and is caused to rotate by, for example, an unshown actuator. The second intake door 23 is adjusted to an arbitrary position between an external air position (a position shown in Fig. 1), wherein the second intake door 23 fully closes the second internal air inlet 21c while fully opening the external air inlet 21b, and an internal air position (not shown), wherein the second intake door 23 fully opens the second internal air inlet 21c while fully closing the external air inlet 21b.

The first intake door 22 and the second intake door 23 can each be caused to operate independently.

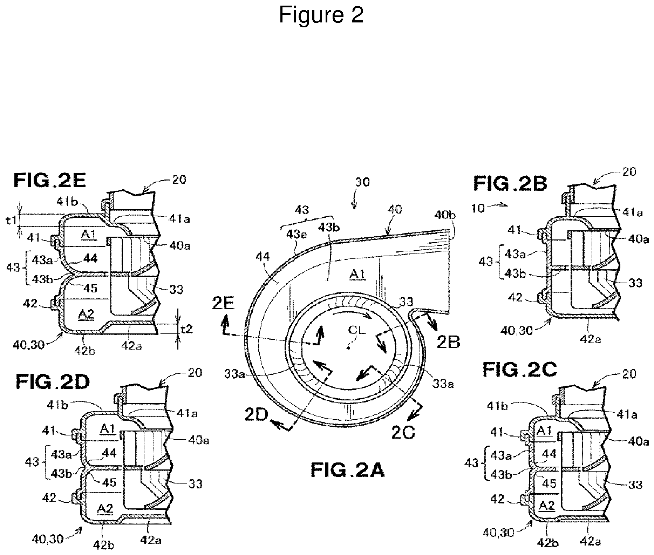

Reference will also be made to Fig. 2A. The centrifugal blower 30 is a single suction type centrifugal blower that sends air sucked in from an upper side in a downstream direction. The centrifugal blower 30 has a scroll housing 40 whose flow path area increases in accordance with a winding angle, a motor 32, housed in a lower portion of the scroll housing 40, wherein a rotary shaft 32a extends in up and down directions, and an impeller 33, which is connected to an upper portion of the motor 32, and rotates owing to the motor 32 operating.

In the present working example, an upper end side of the rotary shaft 32a (a leading end side of the motor 32) is referred to as "one side" as appropriate, and a lower end side is referred to as an "other side" as appropriate. In the present working example, wherein the rotary shaft 32a is positioned in an upper portion of the motor 32 and faces in up and down directions, an upper side is the one side, and a lower side is the other side. Directions in which the one side and the other side point may change in accordance with a position or a direction of orientation of the rotary shaft 32a.

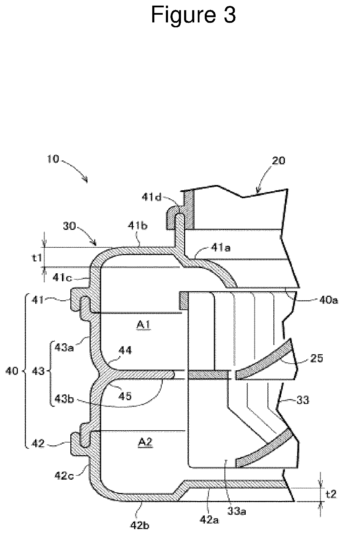

Reference will be made to Fig. 3. The scroll housing 40 is of a logarithmic spiral form. The scroll housing 40 has an upper case 41 (a one side case 41) coupled to the air introduction housing 21, a lower case 42 (an other side case 42) provided opposing the upper case 41, and an intermediate case 43, which connects the upper case 41 and the lower case 42 and opposes an outer periphery of the impeller 33.

The upper case 41, the lower case 42, and the intermediate case 43 can be manufactured by, for example, injection molding. By the scroll housing 40 being divided into three members, each member can be configured of a resin molded part, even when of a complex form.

Reference will be made to Fig. 1. A suction port 40a for introducing air into an interior of the scroll housing 40 is formed in the upper case 41. A discharge port 40b, which is connected to the HVAC case 13 and discharges air, is formed by the upper case 41, the lower case 42, and the intermediate case 43.

The impeller 33 has a multiple of blades 33a, and the blades 33a can be rotated centered on an axis of rotation CL by the motor 32. The blades 33a are disposed in a circular form in an erected state. In other words, the blades 33a are disposed in such a way as to form a blade cascade in a circumferential direction.

The HVAC case 13 is such that an air flow path is formed in the interior, and air blown by the centrifugal blower 30 flows in. A multiple of discharge ports (not shown) are formed in the HVAC case 13, and the discharge ports discharge air that has flowed into the air flow path toward the inside of the vehicle cabin. Also, case dividing wall portions 13a and 13b are disposed in such a way as to divide the air flow path into an upper side and a lower side.

Reference will be made to Fig. 3. The upper case 41 has an upper general face portion 41a (a one side reference face 41a) opposing a region above the blade cascade, an upper bulging portion 41b (a one side bulging face 41b), which is formed to be continuous with the upper general face portion 41a on a radial direction outer side, and bulges to an upper side, an upper side wall portion 41c (a one side peripheral face portion 41c) that extends toward a lower side from the upper bulging portion 41b, and a protruding fitting portion 41d, which protrudes upward from the upper general face portion 41a, and is fitted in the air introduction housing 21.

The lower case 42 has a lower general face portion 42a (an other side reference face 42a) opposing a region below the blade cascade, a lower bulging portion 42b (an other side bulging face 42b), which is formed to be continuous with the lower general face portion 42a on a radial direction outer side, and bulges to the lower side, and a lower side wall portion 42c (an other side peripheral face portion 42c) that extends toward the upper side from the lower bulging portion 42b.

The intermediate case 43 has a peripheral face portion 43a, which is disposed opposing an outer peripheral face of the blade cascade, and a dividing wall portion 43b extending toward the blade cascade from the peripheral face portion 43a.

The upper bulging portion 41b and the lower bulging portion 42b are both positioned farther to a radial direction outer side than the blade cascade. Also, a lower end portion of the upper side wall portion 41c and an upper end portion of the lower side wall portion 42c are formed in a groove form in a circumferential direction in order that upper and lower end portions of the intermediate case 43 can be fitted in.

The protruding fitting portion 41d is formed on an outer periphery of a boundary portion between the upper general face portion 41a and the upper bulging portion 41, and is continuous in a circumferential direction.

Upper and lower end portions of the peripheral face portion 43a are fitted respectively into the lower end portion of the upper side wall portion 41c and the upper end portion of the lower side wall portion 42c, which are formed in a groove form. The upper and lower end portions of the peripheral face portion 43a protrude to the radial direction outer side in such a way that the upper and lower end portions can be fitted into the lower end portion of the upper side wall portion 41c and the upper end portion of the lower side wall portion 42c. Because of this, a fitting portion of the upper case 41 and the intermediate case 43 and a fitting portion of the lower case 42 and the intermediate case 43 are each of a labyrinth structure. In addition, inner peripheral faces of the upper case 41, the lower case 42, and the intermediate case 43 are formed to be practically flush.

A region farther to the radial direction outer side than the impeller 33 of internal spaces A1 and A2 in which the impeller 33 is housed inside the scroll housing 40 is divided by the dividing wall portion 43b into an upper space A1 (a one side space A1), which is an upper side space, and a lower space A2 (an other side space A2), which is a lower side space. The dividing wall portion 43b is formed from a periphery of the impeller 33 to the discharge port 40b (refer to Fig. 1).

A boundary between the peripheral face portion 43a and the dividing wall portion 43b is formed of an upper boundary portion 44 (a one side boundary portion 44), which is formed in such a way as to face the upper space A1, and a lower boundary portion 45 (an other side boundary portion 45), which is formed in such a way as to face the lower space A2.

The upper boundary portion 44 and the lower boundary portion 45 are both formed in a curved form in a circumferential direction of the rotary shaft 32a (refer to Fig. 1). More specifically, the upper boundary portion 44 and the lower boundary portion 45 are of a fan form whose central angle is approximately 90 degrees, with a crosssection perpendicular to an air flow direction as a reference.

Reference will be made to Fig. 2A to Fig. 2E. Fig. 2B to Fig. 2E are partial sectional views of Fig. 2A, wherein Fig. 2B is a sectional view of a region whose winding angle is smallest (whose winding angle is 0°). The winding angle increases in the order of Fig. 2C to Fig. 2D, and Fig. 2E is a region whose winding angle is largest (a region whose winding angle is greater than 180°, and smaller than 360°).

An amount of bulge of the upper bulging portion 41b increases as the winding angle increases. That is, a dimension t1 of the bulging of the upper bulging portion 41b with respect to the upper general face portion 41a increases in accordance with the winding angle, with an axial direction (a vertical direction) as a reference. An upper face of the upper bulging portion 41b is formed to be tapered in a circumferential direction.

The same applies to the lower bulging portion 42b. An amount of bulge of the lower bulging portion 42b increases as the winding angle increases. That is, a dimension t2 of the bulging of the lower bulging portion 42b with respect to the lower general face portion 42a increases in accordance with the winding angle, with an axial direction (a vertical direction) as a reference. A lower face of the lower bulging portion 42b is formed to be tapered in a circumferential direction.

A radius of curvature of the upper boundary portion 44 (the same as a radius of the fan form, the same applying hereafter) and a radius of curvature of the lower boundary portion 45 both increase as the winding angle increases. In other words, the radius of curvature of the upper boundary portion 44 and the radius of curvature of the lower boundary portion 45 increase in accordance with the winding angle.

An operation and an advantage of the centrifugal blower 30 will be described.

Reference will be made to Fig. 1. By causing the centrifugal blower 30 to operate, the vehicle-use air conditioning device 10 suctions in air from the air introduction unit 20 above, and discharges the air to the HVAC case 13. Air discharged to the HVAC case 13 reaches a predetermined temperature by being subjected to a heat exchange in the heat exchanger 14, and is discharged to the vehicle cabin from an unshown discharge port. A multiple of discharge ports are formed, and an opening and closing door (not shown) is provided for each discharge port.

Herein, the position of the first intake door 22, the position of the second intake door 23, a rotational speed of the rotary shaft 32a, and positions of the opening and closing doors can be controlled by a control unit (not shown). The control unit controls the aforementioned details based on a temperature outside the vehicle, an amount and a direction of sunlight, a temperature in the vehicle cabin, a temperature set by an occupant, and the like. Because of this, appropriate air is drawn in from outside the vehicle and/or inside the vehicle cabin, and the temperature in the vehicle cabin can be regulated to a predetermined temperature. In particular, by adjusting in such a way that the first intake door 22 is in the internal air position and the second intake door 23 is in the external air position, the air introduction unit 20 and the centrifugal blower 30 can be operated as an internal/external air two-level flow mode. That is, simultaneously with air in the vehicle cabin (internal air) being taken in from the first internal air inlet 21a, caused to circulate in an interior of the cylindrical body 25, and discharged to the lower space A2, air outside the vehicle can be taken in from the external air inlet 21b, caused to circulate in a region between the suction port 40a and the cylindrical body 25, and discharged to the upper space A1.

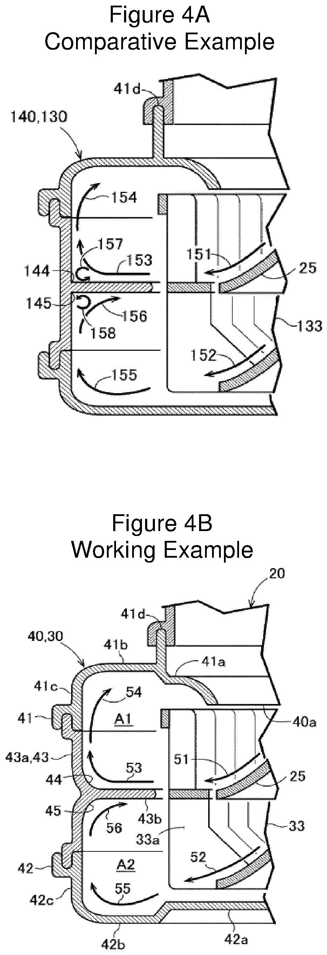

Reference will be made to Fig. 4A. A centrifugal blower 130 according to a comparative example is such that an upper boundary portion 144 and a lower boundary portion 145 are formed in an angular form in a circumferential direction. That is, the upper boundary portion 144 and the lower boundary portion 145 are not formed in a curved form. Air guided into a scroll housing 140 by an impeller 133 passes mainly through a lower end owing to inertia flowing from above to below in the centrifugal blower 130, and heads outward in a radial direction, as indicated by arrows 151 and 152. Air discharged into the upper space A1 and the lower space A2 flows in a circumferential direction of the scroll housing 140 (in a front to back direction in the drawing) while flowing upward along an inner peripheral face of the scroll housing 140, as indicated by arrows 153 to 156.

At this time, there is concern that a vortex flow will occur in a vicinity of the upper boundary portion 144 and the lower boundary portion 145, as indicated by arrows 157 and 158. When a vortex flow occurs, a smooth flow of air is inhibited, and air blowing efficiency decreases.

Reference will be made to Fig. 4B. The centrifugal blower 30 according to a working example is also such that air guided into the scroll housing 40 by the impeller 33 passes mainly through a lower end owing to inertia, and heads outward in a radial direction, as indicated by arrows 51 and 52. Air discharged into the upper space A1 and the lower space A2 flows in a circumferential direction of the scroll housing 40 (in a front to back direction in the drawing) while flowing upward along an inner peripheral face of the scroll housing 40, as indicated by arrows 53 to 56.

A boundary between the peripheral face portion 43a and the dividing wall portion 43b is formed of the upper boundary portion 44, which is formed in such a way as to face the upper space A1, and the lower boundary portion 45, which is formed in such a way as to face the lower space A2. The upper boundary portion 44 and the lower boundary portion 45 are formed in a curved form in the circumferential direction of the rotary shaft 32a (refer to Fig. 1). Owing to the upper boundary portion 44 and the lower boundary portion 45 being formed in a curved form, a vortex flow can be restricted from occurring in the upper boundary portion 44 and the lower boundary portion 45. As a result, the centrifugal blower 30 with high air blowing efficiency can be provided.

Owing to at least one of the upper boundary portion 44 or the lower boundary portion 45 being formed in a curved form, an occurrence of a vortex flow in a region formed in a curved form can be restricted. That is, owing to at least one of the upper boundary portion 44 or the lower boundary portion 45 being formed in a curved form, an advantage of the invention is obtained.

Reference will be made to Fig. 2A to Fig. 2E. The radius of curvature of the upper boundary portion 44 and the radius of curvature of the lower boundary portion 45 increase as the winding angle increases. The amount of air flowing inside the scroll housing 40 increases as the winding angle increases. Because of this, it is thought that a vortex flow is liable to occur in a position in which the winding angle is greater. Meanwhile, an occurrence of a vortex flow can be further restricted by increasing the radius of curvature of a curved form. An occurrence of a vortex flow can be more effectively restricted in a region in which a vortex flow is liable to occur, and a large flow path area can be secured in a region in which a vortex flow is unlikely to occur.

A dimension of the bulging of the upper bulging portion 41b with respect to the upper general face portion 41a increases in accordance with the winding angle. An amount by which the upper boundary portion 44 is formed in a curved form and the flow path area decreases is such that a predetermined flow path area can be secured by the upper bulging portion 41b being formed. Therefore, a decrease in air blowing efficiency can be prevented.

The same applies to the lower bulging portion 42b. That is, a dimension of the bulging of the lower bulging portion 42b with respect to the lower general face portion 42a increases in accordance with the winding angle. An amount by which the lower boundary portion 45 is formed in a curved form and the flow path area decreases is such that a predetermined flow path area can be secured by the lower bulging portion 42b being formed. Therefore, a decrease in air blowing efficiency can be prevented.

### Second Working Example

Next, a centrifugal blower 30A according to a second working example will be described, based on the drawings.

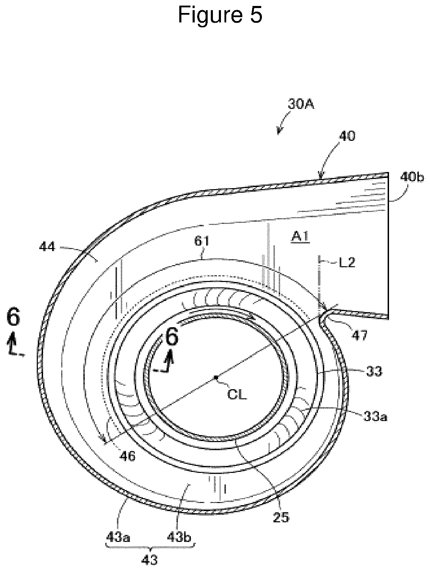

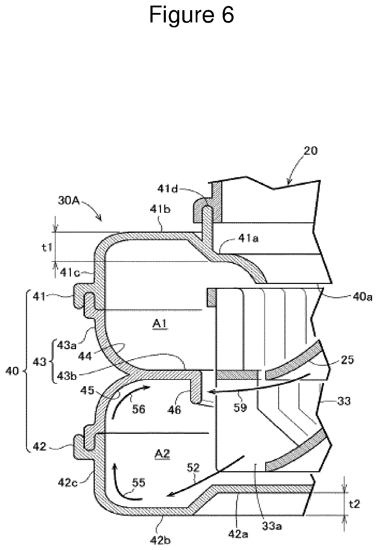

Reference will be made to Fig. 5 and Fig. 6. Fig. 5 corresponds to Fig. 2A, and Fig. 6 corresponds to Fig. 2E. The centrifugal blower 30A according to the second working example has a collision restricting wall portion 46. Other basic configurations are the same as those of the centrifugal blower 30 according to the first working example. With regard to a portion the same as in the first working example, the reference sign will be utilized, and a detailed description will be omitted.

The collision restricting wall portion 46 extends in an axial direction toward the lower space A2 from a leading end on a radial direction inner side of the dividing wall portion 43b. The collision restricting wall portion 46 is formed in a region of the dividing wall portion 43b whose winding angle is greater than 180°, and smaller than 360° (refer to an arrow 61).

The collision restricting wall portion 46 is formed as far as a position that coincides with a tongue portion 47 of the scroll housing 40 (refer to a dotted chain line L2). Also, the collision restricting wall portion 46 extends farther downward as the winding angle increases. A lower side end face of the collision restricting wall portion 46 is formed to be tapered in a circumferential direction.

The centrifugal blower 30A according to the second working example is also such that air discharged from the impeller 33 is indicated mainly by the arrows 52, 55, and 56. Meanwhile, one portion of air, although a smaller amount, is discharged outward in a radial direction from above, as indicated by an arrow 59. A collision between a discharged air flow discharged to the radial direction outer side from the blade cascade (refer to the arrow 59) and a returned air flow returned to the blade cascade after circulating around the lower space A2 (refer to the arrows 55 and 56) is restricted by the collision restricting wall portion 46 being formed. Because of this, a smooth flow of air can be secured, and a decrease in air blowing efficiency can be prevented.

The heretofore described centrifugal blower also achieves a predetermined advantage of the invention.

In particular, by the collision restricting wall portion 46 being provided in a region whose winding angle is large in which there is a large amount of air and an effect of an air flow collision is likely to be large, that is, by the collision restricting wall portion 46 being provided in a region whose winding angle is greater than 180°, air can be caused to flow smoothly.

Provided that actions and advantages of the invention are achieved, the invention is not limited to the working examples.

### Industrial Applicability

A centrifugal blower of the invention is suitable for mounting in a vehicle-use air conditioning device. Reference Signs List

30 centrifugal blower
32 motor, 32a rotary shaft
33 impeller, 33a blade
40 scroll housing, 40a suction port, 40b discharge port
41 upper case (one side case), 41a upper general face portion (one side reference face), 41b upper bulging portion (one side bulging face)
42 lower case (other side case), 42a lower general face portion (other side reference face), 42b lower bulging portion (other side bulging face)
43 intermediate case, 43a peripheral face portion, 43b dividing wall portion
44 upper boundary portion (one side boundary portion)
45 lower boundary portion (other side boundary portion)
46 collision restricting wall portion
A1 upper space (one side space, internal space)
A2 lower space (other side space, internal space)
CL central axis

## Claims

1. A vehicle-use single suction type centrifugal blower (30, 30A), comprising:
a motor (32) having a rotary shaft (32a);
an impeller (33) that has a multiple of blades (33a) forming a blade cascade in a circumferential direction, is driven to rotate around an axis of rotation (CL) of the rotary shaft (32a) by the motor (32), and discharges air suctioned in from one axial direction side to an inner side of the blade cascade toward a radial direction outer side of the rotary shaft (32a); and
a scroll housing (40) including an internal space (A1, A2) housing the impeller (33), a suction port (40a) opening on the one axial direction side, and a discharge port (40b) opening toward the radial direction outer side of the rotary shaft (32a), wherein a sectional area of the internal space (A1, A2) increases in accordance with a winding angle, wherein
the scroll housing (40) has a one side case (41) that has the suction port (40a) and opposes at least one side of the blade cascade, an other side case (42) that opposes at least an other side of the blade cascade, and an intermediate case (43) that connects the one side case (41) and the other side case (42) and opposes a radial direction outer side of the blade cascade,
the intermediate case (43) has a peripheral face portion (43a) disposed opposing the blade cascade and a dividing wall portion (43b) extending from the peripheral face portion (43a) toward the blade cascade,
a region of the internal space (A1, A2) farther to a radial direction outer side than the impeller (33) is divided by the dividing wall portion (43b) into a one side space (A1), which is a space on the one side, and an other side space (A2), which is a space on the other side,
a boundary between the peripheral face portion (43a) and the dividing wall portion (43b) is formed of a one side boundary portion (44) formed in such a way as to face the one side space (A1) and an other side boundary portion (45) formed in such a way as to face the other side space (A2), and
at least one of the one side boundary portion (44) or the other side boundary portion (45) is formed in a curved form in a circumferential direction of the rotary shaft (32a) .

2. The centrifugal blower according to claim 1, wherein a radius of curvature of the one side boundary portion (44) formed in a curved form and/or a radius of curvature of the other side boundary portion (45) formed in a curved form increases in accordance with the winding angle.

3. The centrifugal blower according to claim 2, wherein the one side case (41) has a one side reference face (41a), which opposes the blade cascade, and a one side bulging face (41b), which is farther to the radial direction outer side than the blade cascade and bulges farther to the axial direction one side than the one side reference face (41a), and
a dimension (t1) of a bulging in the axial direction of the one side bulging face (41b) with respect to the one side reference face (41a) increases in accordance with the winding angle, and/or
the other side case (42) has an other side reference face (42a), which opposes the blade cascade, and an other side bulging face (42b), which is farther to the radial direction outer side than the blade cascade and bulges farther to the axial direction other side than the other side reference face (42a), and
a dimension (t2) of a bulging in the axial direction of the other side bulging face (42b) with respect to the other side reference face (42a) increases in accordance with the winding angle.

4. The centrifugal blower according to any one of claim 1 to claim 3, wherein the dividing wall portion (43b) has a collision restricting wall portion (46) that extends in the axial direction from a radial direction inner side leading end to the other side space (A2), and restricts a collision between a discharged air flow discharged to the radial direction outer side from the blade cascade and a returned air flow returned to the blade cascade after circulating around the other side space (A2), wherein
the collision restricting wall portion (46) is formed in at least one portion of a region of the dividing wall portion (43b) whose winding angle is greater than 180 degrees.
